# EUROPÄISCHE PATENTSCHRIFT

(11) **EP 1 271 896 B1**
(45) Veröffentlichungstag und Bekanntmachung des Hinweises auf die Patenterteilung: **28.07.2004**
(21) Anmeldenummer: 02405332.4
(22) Anmeldetag: 24.04.2002
(51) Int. Cl.: H04L 29/12, H04L 29/06

(54) **Verfahren und System für mobile IP-Nodes in heterogenen Netzwerken**
Method and system for mobile IP Nodes in heterogeneous networks
Méthode et système pour des Ip-Nodes mobiles dans un réseau hétérogène

(30) Priorität: 18.06.2001 EP 18105940
(43) Veröffentlichungstag der Anmeldung: 02.01.2003
(73) Patentinhaber: Swisscom Mobile AG, 3050 Bern (CH)
(72) Erfinder: Linder, Jan, 3012 Bern (CH); Danzeisen, Marc, 3012 Bern (CH)
(74) Vertreter: BOVARD AG - Patentanwälte

(56) Entgegenhaltungen:
- EP-A- 0 998 094
- EP-A- 1 089 495
- PERKINS C E: "MOBILE NETWORKING THROUGH MOBILE IP" IEEE INTERNET COMPUTING, IEEE SERVICE CENTER, PISCATAWAY, NJ, US, Bd. 2, Nr. 1, 1998, Seiten 58-69, XP000764776 ISSN: 1089-7801

## Beschreibung

Die vorliegende Erfindung betrifft ein Verfahren für mobile IP-Nodes in heterogenen Netzwerken, bei welchem ein Home-Agent eine temporäre IP-Care-of-Adresse einer statischen IP-Home-Adresse dynamisch zuordnet, wenn der mobile Node in den heterogenen Netzwerken bewegt wird, wobei die dynamische Care-of-Adresse den topologisch aktuellen Netzwerkstandort des mobilen Nodes angibt und wobei IP-Datenpakete mit der IP-Home-Adresse des mobilen Nodes als Zieladresse zur Care-of-Adresse des mobilen Nodes umgeleitet werden. Insbesondere betrifft die Erfindung ein Verfahren für mobile Nodes in heterogenen Netzwerken mit Realtime-Applikationen.

In den letzten Jahren ist weltweit die Zahl der Internetbenutzer und damit der dort angebotenen Information exponentiell gestiegen. Obwohl jedoch das Internet weltweit Zugang zu Informationen bietet, haben wir normalerweise keinen Zugang dazu, bis wir nicht an einem bestimmten Netzzugang, wie z.B. im Büro, in der Schule, an der Universität oder zu Hause, angekommen sind. Das wachsende Angebot an IP-fähigen mobilen Geräten, wie z.B. PDAs, Mobilfunktelefonen und Laptops, beginnt unsere Vorstellung vom Internet zu verändern. Ein analoger Übergang von fixen Nodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie WAP, GPRS oder UMTS. Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen.

Mobile Computerbenutzung darf nicht verwechselt werden mit der Computerbenutzung und Netzwerkfähigkeit, wie wir sie heute kennen. Bei mobiler Netzwerkbenutzung sollte ein bestehender IP-Zugriff von Applikationen auf dem mobilen Node nicht unterbrochen werden, wenn der Benutzer seinen Standort im Netzwerk ändert. Im Gegenteil sollten alle Verbindungs- und Schnittstellenänderungen z.B. bei einem Wechsel in unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch bei einem Schnittstellenwechsel z.B. während der Benutzung von Real-Time Applikationen. Wirkliches mobiles IP-Computing weist viele Vorteile basierend auf einem jederzeitigen stabilen Zugang zum Internet auf. Mit einem solchen Zugang liesse sich die Arbeit frei und unabhängig vom Schreibtisch gestalten. Die Anforderungen an mobile Nodes in Netzwerken unterscheidet sich aber von der erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zu Genüge. So kann insbesondere mobiles Computing mit Internet Zugriff zusammen mit anderen Applikationen wie z.B. in Kombination mit Positionsbestimmungsgeräten, wie dem satellitenbasierenden GPS (Global Positioning System) sinnvoll sein.

Eines der Probleme beim mobilen Netzwerkzugriff via Internet Protokoll (IP) ist, dass das IP-Protokoll, welches dazu benutzt wird, die Datenpakete von der Quelladresse (Source Address) zur Zieladresse (Destination Address) im Netz zu routen, sog. IP-Adressen (IP: Internet Protocol) benutzt. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den Mobile IP Standart (IEFT RFC 2002, Okt. 1996) der Internet Engineering Task Force (IETF) gelöst, indem das Mobile IP dem mobilen Node erlaubt, zwei IP-Adressen zu benutzen. Die eine davon ist die normale, statische IP-Adresse (Home-Adresse), die den Ort des Heimnetzes angibt, während die zweite eine dynamische IP Care-Of-Adresse ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Mit Mobile IP des IEFT werden aber nicht alle Probleme der mobilen Netzwerkbenutzung gelöst. Möchte z.B. ein Benutzer zwischen zwei verschiedenen Netzwerkschnittstellen wechseln, während eine IP-Applikation am Laufen ist, wird in dem Moment, in welchem er die alte Netzanbindung verlässt, die IP-Verbindung unterbrochen. Diese wird mindestens solange unterbrochen sein, bis beim mobilen Node die neue Anbindung an das Netz stattgefunden hat und bis beim sog. Home-Agenten der neue Standort, d.h. die neue Care-of-Adresse, bekannt ist und registriert wurde. Der Home-Agent ist normalerweise ein fester Netzwerknode, der die beiden Adressen des mobilen Nodes (Home-Adresse und Care-of-Adresse) verwaltet und die entsprechenden Datenpakete umleitet bzw. routet. Liegt die Unterbruchszeit für den Wechsel über den z.B. im TCP (Transfer Control Protocol) vorgegebenen Time-out-Delays für Todzeiten, wird die IP-Verbindung natürlicherweise so oder so unterbrochen werden. Selbst wenn jedoch die Unterbruchszeit innerhalb des im TCP vorgegebenen Time-out-Delays liegt, können die IP-Applikationen die Verbindung nicht aufrecht erhalten, falls nicht permanent eine physikalische Netzwerkschnittstelle vorhanden ist. Beispiele dafür sind der Wechsel der Netzwerkkarte in einem mobilen Node (z.B. ein portabler PC), der für die physikalischen Netzwerkschnittstellen nur einen verfügbaren Karteneinschub hat. Die IP-Applikationen bzw. der Kernel erhalten bei einem solchen Wechsel der physikalischen Netzwerkschnittstelle die Meldung, dass dem IP-Datentunnel kein physikalisches Netzwerkgerät mehr zugeordnet werden kann und brechen die Verbindung ab. Dies führt dazu, dass die IP-Applikationen nach dem Wechsel der Netzwerkkarte im Normalfall neu gestartet werden müssen, um auf einen bestimmten IP-Datentunnel zugreifen zu können. Ein anderes Problem ist, dass von Seiten des mobilen Nodes in der Unterbruchszeit zwischen den Anbindungen die Datenpakete verloren gehen, da kein physikalisches Netzwerkgerät mehr zugeordnet ist. Dies hat nicht nur einen Verlust von Daten zur Folge, sondern bewirkt auch, dass die Übermittlungsrate der IP-Pakete durch die IP-Applikationen entsprechend der Dauer der Unterbruchszeit verlangsamt wird. Sobald die neue Anbindung stattgefunden hat, wird die Übertragungsrate erst wieder schrittweise erhöht. Dies bremst die IP-Applikation bei jedem Schnittstellen- bzw. Standortwechsel unnötig.

Netzwerkschnittstellen werden traditionellerweise in verschiedene Layers aufgeteilt. Interessant für die vorliegende Erfindung sind die untersten Layers. Man unterscheidet zwischen Layer 1 (L1), der der physikalischen Netzwerkschnittstelle entspricht (z.B. der Netzwerkinterfacekarte NIC (Network Interface Card)), dem Layer 2 (L2), auf welchem eine erste softwaremässige Erkennung und Identifikation der Schnittstelle ermöglicht wird und Layer 3 (L3) als IP-Layer (IP: Internet Protocol), auf welcher Ebene die Unterscheidung zwischen unterschiedlicher IP-Netzwerkanbindungen für Softwareapplikationen des Systems geschieht sowie der Anbindung der IP-Applikationen an die IP-Netzwerkschnittstelle. Oberhalb des L3 können weitere Layers definiert werden, wie z.B. ein TCP (Transfer Control Protocol) Layer etc.. Unterschiedliche physikalische Netzwerkschnittstellen, können auch unterschiedliche L2 besitzen. So unterscheidet man packet-switched und circuit-switched Schnittstellen. Im Normalfall besitzt z.B. jeder Node eines Netzwerkes eine packet-switched Schnittstelle mit einer eindeutigen Netzwerkadresse, wobei diese Netzwerkadresse Data Link Control (DLC) Adresse oder Media Access Control (MAC) Adresse genannt wird. Bei Netzwerken, welche mit dem IEEE 802 Standart (IEEE: Institute of Electrical and Electronics Engineers) konform sind (wie z.B. das Ethernet), werden die DLC-Adressen gewöhnlich MAC-Adressen genannt. Eine Netzwerkadresse muss jedoch mindestens dem OSI Reference Model (OSI: Open System Interconnection des ISO-Standards (International Organization for Standardization) genügen, damit sie DLC-Adresse genannt wird. Das OSI Reference Model definiert einen 7 Layer Rahmen zum Implementieren von Netzwerkprotokollen. Mit anderen Worten ist eine DLC-Adresse bzw. eine MAC-Adresse eine Hardwareadresse, die den Node bzw. die physikalische Netzwerkschnittstelle eindeutig im Netz identifiziert. Einige Protokolle, wie z.B. Ethernet oder Token-Ring benutzen die DLC/MAC-Adresse exklusive, d.h. sie können ohne diese Adresse nicht mit dem entsprechenden Node kommunizieren. Eine circuit-switched Schnittstelle besitzt dagegen keine solche DLC- oder MAC-Adresse, d.h. also auch keine entsprechende Identifikation DLCI (DLC Identifier). Beispiele für Protokolle, welche circuit-switched Schnittstellen benutzen, sind u.a. PPP (Point to Point Protocol), SLIP (Serial Line Internet Protocol) oder GPRS (Generalized Packet Radio Service).

Eine Lösung zu den weiter oben dargelegten Nachteilen des Standes der Technik wird in der europäischen Patentschrift EP 1089495 der Firma Nortel Networks Limited offenbart. EP 1089495 zeigt ein System und Verfahren, bei welchem es unter bestimmten Umständen möglich ist, einen Wechsel der physikalischen Schnittstellen vorzunehmen, ohne dass die aktiven IP-Applikationen auf dem Rechner unterbrochen werden oder neu gestartet werden müssten, da ihre Anbindung an die ursprüngliche Schnittstelle verloren geht. Nortel schlägt dabei einen sogenannten Network Access Arbitrator (NAA) vor. Der NAA sorgt dafür, dass die unterschiedlichen MAC-Adressen der einzelnen verfügbaren physikalischen Netzwerkschnittstellen über eine einzige feste MAC-Adresse des sogenannten primary NIC umgeleitet wird. Der NAA verbindet die L2-Layer der vorhandenen NICs, indem er eben die Datenpakete vom primary NIC zu der entsprechenden MAC-Adresse einer weiteren Netzwerkschnittstelle (secondary NIC) umleitet. Dabei wird jedoch keine virtuelle Schnittstelle generiert, sondern der NAA leitet die MAC-Adresse über die erste Schnittstelle mit einer MAC-Adresse des primary NIC auf eine andere um (virtual adapter driver). Es liegt intrinsisch in der Art dieser Erfindung, dass für den NAA mindestens eine physikalische Schnittstelle mit einer MAC-Adresse permanent vorhanden sein muss, da der NAA seine Funktion ansonsten verliert. Dies kann bei mobilen Geräten, wie Laptops etc, aber ein Nachteil sein, falls diese z.B. nur einen Slot zum Anbringen einer PCMCIA-Netzwerkkarte besitzen. Wird die eine Netzwerkkarte entfernt um auf eine andere Neztwerktechnologie umzuschalten (z.B. von Ethernet mit Festnetz auf Wireless), funktioniert die Nortel-Erfindung nicht mehr. Das gleiche gilt, falls aus Versehen der Benutzer die Netzwerkschnittstelle (primary NIC) entfernt, über welche der NAA die weiteren MAC-Adressen umleitet. Ein weiterer Nachteil der Nortel-Erfindung ist, dass sie sensitiv auf die Definition bzw. den Standart der hardwaremässigen Netzwerkadresse der Netzwerkschnittstelle ist. Entspricht die Adresse z.B. nicht dem IEEE 802 Standart (MAC-Adressen) und wurde der neue Adressenstandart vorgängig nicht explizit im NAA definiert, funktioniert der NAA mit diesen Schnittstellen nicht, da er die MAC-Adresse nicht mehr umleiten kann. Dies macht die Nortel-Erfindung inflexibel, da neue Standards nicht dynamisch erkannt werden können. Ein mindestens so grosser Nachteil entsteht ebenfalls durch die explizite Benutzung der MAC-Adressen. Circuit-switched Schnittstellen besitzen keine entsprechenden MAC- oder Netzwerkadressen. Da der NAA jedoch nur Geräte mit MAC-Adressen registrieren kann, um die Datenpakete umzuleiten, sind circuit-switched Schnittstellen für den NAA nicht verfügbar, obwohl ihre Anbindung an den IP-Layer ebenfalls möglich sein sollte.

Es ist eine Aufgabe dieser Erfindung, ein neues Verfahren für mobile IP-Nodes in heterogenen Netzwerken vorzuschlagen. Insbesondere soll das Umschalten von einer Netzanbindung zu einer anderen ohne Unterbruch der IP-Applikationen durchgeführt werden können und gegebenenfalls auch bei Realtime-Applikationen eine ununterbrochene Weiterführung des Programmablaufs ermöglichen, ohne von spezifischen Protokollen oder Netzwerktechnologien abhängig zu sein.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein Home-Agent eine temporäre IP-Care-of-Adresse einer statischen IP-Home-Adresse dynamisch zuordnet, wenn der mobile Node in den heterogenen Netzwerken bewegt wird, wobei die dynamische Care-of-Adresse den topologisch aktuellen Netzwerkstandort des mobilen Nodes angibt und wobei IP-Datenpakete mit der IP-Home-Adresse des mobilen Nodes als Zieladresse zur Care-of-Adresse des mobilen Nodes umgeleitet werden, dass ein Schnittstellenverwaltungsmodul des mobilen Nodes den mobilen Node nach verfügbaren physikalischen Netzwerkschnittstellen überprüft, eine Lookup-Table mit den verfügbaren und konfigurierbaren physikalischen Netzwerkschnittstellen erstellt und sich an eine der verfügbaren physikalischen Netzwerkschnittstellen anbindet, dass ein oder mehrere IP-Applikationen des mobilen Nodes über eine im mobilen Node generierte virtuelle IP-Netzwerkschnittstelle auf die heterogenen Netzwerke zugreifen, wobei die permanente generierte virtuelle IP-Netzwerkschnittstelle über das Schnittstellenverwaltungsmodul mit dem aktuellen Netzwerk verbunden ist, und dass bei einem Wechsel der physikalischen Netzwerkschnittstelle des mobilen Nodes die Anbindung der permanenten virtuellen IP-Netzwerkschnittstelle an das Netzwerk mittels des Schnittstellenverwaltungsmoduls basierend auf der Lookup-Table aktualisiert wird. Insbesondere kann der Wechsel der physikalischen Netzwerkschnittstelle einen Wechsel innerhalb unterschiedlicher Netze umfassen, wie z.B. Ethernet, Bluetooth, Mobilfunknetze (GSM: Global System for Mobile Communication, UMTS: Universal Mobile Telephone System etc.) oder WLAN (Wireless Local Area Network), oder auch einen topologischen Standortwechsel innerhalb des gleichen Netzes, beispielsweise bei direkter Anbindung an das Ethernet. Ein Vorteil der Erfindung ist, dass ein Anbindungs- oder Schnittstellenwechsel des mobilen Nodes in Netzwerk zu keinem Unterbruch der IP-Applikationen führt, sondern diese ohne weiteres Zutun des Benutzers weiterlaufen, da die virtuelle Schnittstelle als permanete Schnittstelle gegenüber den IP-Applikationen bestehen bleibt. Im Gegensatz zum Stand der Technik wird mit der hier vorgeschlagenen Lösung eine echte virtuelle Netzwerkschnittstelle auf dem L2-Layer generiert, und nicht ein Umleiten von Netzwerkadressen mittels einer bestehenden Netzwerkadresse, z.B. einer MAC-Adresse. Dies hat den Vorteil, dass auch beim Entfernen sämtlicher vorhandenen physikalischen Netzwerkschnittstellen (NIC) es nicht zu einem Unterbruch der laufenden IP-Applikationen kommt. Protokolle wie Ethernet oder Token-Ring benutzen die DLC-Adressen direkt. Das IP-Protokoll (ebenso natürlich in Kombination mit TCP als TCP/IP) hingegen benutzt eine logische Adresse auf seiner Netzwerk-Layerebene um einen Node des Netzwerkes zu identifizieren. Diese werden erst in einem tieferen Layer in DLC-Adressen übersetzt. Da die vorliegende Erfindung eine virtuelle Netzwerkschnittstelle direkt nach dem IP-Layer generiert, hat sie eben den Vorteil, dass sie die Anbindung der IP-Applikationen ganz unabhängig von Veränderungen der unteren Layers (L2-Layer / L1-Layer) aufrecht erhalten kann. Dies betrifft nicht nur den erwähnten Fall, wo alle physikalischen Netzwerkschnittstellen (NIC) entfernt werden. Die vorliegende Erfindung ist ebenso unabhängig vom Standart der Netzwerkadressen (z.B. MAC- oder DLC-Adressen) der benutzten Netzwerkschnittstellen, sondern kann auch den Wechsel zwischen packet-switched und circuit-switched Schnittstellen problemlos handhaben. Wird insbesondere einmal der Standart gewechselt, muss die vorliegende Lösung nicht angepasst werden, da sie die logische Adresse des IP-Layers und nicht die harwaremässigen Netzwerkadressen benutzt. Deshalb hat das Eingreifen auf einer höheren Stufe der Abstraktion, d.h. der Layers den Vorteil, dass man unabhängig von Standarts, wie z.B. Hardwareadressen, ist.

In einer Ausführungsvariante überprüft das Schnittstellenverwaltungsmodul den mobilen Node nach verfügbaren physikalischen Netzwerkschnittstellen periodisch. Diese Ausführungsvariante hat den Vorteil, dass die Lookup-Table stets auf dem aktuellsten Stand gehalten wird und sofort verfügbar ist. Insbesondere kann durch das permanente Monitoring der physikalischen Netzwerkschnittstellen und ihrer Eigenschaften z.B. automatisch gewechselt werden, falls physikalische Netzwerkschnittstellen mit besseren Übertragungsoptionen als die momentan Aktive verfügbar werden. Als Ausführungsvariante ist es auch möglich, dass sich die Kriterien für den automatischen Wechsel der physikalischen Schnittstelle durch den Benutzer bestimmen lassen. Dies hat u.a. den Vorteil, dass der Benutzer sehr individuell entsprechend seinen Bedürfnissen die virtuelle Schnittstelle konfigurieren kann.

In einer Ausführungsvariante wechselt und aktualisiert die virtuelle Schnittstelle über das Schnittstellenverwaltungsmodul die physikalische Schnittstelle automatisch basierend auf Informationen der Lookup-Table. Der Wechsel kann als Ausführungsvariante auch anhand von durch den Benutzer festlegbaren Kriterien automatisch geschehen. Dies hat den Vorteil, dass der mobile Node automatisch je nach definiertem Kriterium stets die physikalische Schnittstelle mit z.B. dem momentan grössten verfügbaren Datendurchsatz oder mit dem besten Preis-Leistungsverhältnis etc. benutzt.

In einer weiteren Ausführungsvariante werden die verfügbaren physikalischen Netzwerkschnittstellen dynamisch konfiguriert. Dies hat u.a. den Vorteil, dass eventuell vorhandene Services wie z.B. ein DHCP (Dynamic Host Configuration Protocol) Service genutzt werden kann und die Handhabung für den Benutzer durch die Automatisierung der Konfiguration vereinfacht wird.

In einer anderen Ausführungsvariante werden die verfügbaren physikalischen Netzwerkschnittstellen statisch konfiguriert. Dies hat u.a. den Vorteil, dass die Konfiguration der Netzwerkschnittstellen für den Benutzer kontrollierbar und überblickbar ist.

Bei allen oben genannten Ausführungsvarianten ist es in einer zusätzlichen Ausführungsvariante möglich, ausgehende IP-Datenpakete in einem Datenbuffer des mobilen Nodes zu buffern, falls die Netzanbindung des mobilen Nodes unterbrochen wird, so dass die Outputdatenrate der einen oder mehreren IP-Applikationen mittels des Datenbuffers aufrechterhalten oder innerhalb einer bestimmten Schwankungstoleranz gehalten wird. Der Vorteil dieser Ausführungsvariante ist u.a., dass bei einem Wechsel der physikalischen Schnittstelle damit die Outputdatenrate einer IP-Applikation konstant bzw. innerhalb einer vorgegebenen Schwankungstoleranz gehalten werden kann, solange die Speicherkapazität des Datenbuffers zum Speichern der ausgehenden Datenpakete ausreicht. Dies hat wiederum den Vorteil, dass die IP-Datendurchsatzrate bei einem Unterbruch durch die IP-Applikationen oder den Kernel nicht heruntergefahren wird.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein Verfahren und eine System für mobile IP-Nodes in heterogenen Netzwerken illustriert.
Figur 2 zeigt ein Blockdiagramm, welches schematisch Mobile IP in einem mobilen Node ohne erfindungsgemässe virtuelle Netzwerkschnittstelle illustriert, wobei sich der mobile Node im Heimnetz, d.h. im Netz der Home-Adresse befindet.
Figur 3 zeigt ein Blockdiagramm, welches schematisch Mobile IP in einem mobilen Node ohne erfindungsgemässe virtuelle Netzwerkschnittstelle illustriert, wobei sich der mobile Node in einem anderen Netz als seinem Heimnetz befindet.
Figur 4 zeigt ein Blockdiagramm, welches schematisch Mobile IP in einem mobilen Node mit einer erfindungsgemässen virtuellen Netzwerkschnittstelle illustriert, wobei sich der mobile Node im Heimnetz, d.h. im Netz der Home-Adresse befindet.
Figur 5 zeigt ein Blockdiagramm, welches schematisch Mobile IP in einem mobilen Node mit einer erfindungsgemässen virtuellen Netzwerkschnittstelle illustriert, wobei sich der mobile Node in einem anderen Netz als seinem Heimnetz befindet.
Figur 6 zeigt ein Blockdiagramm, welches schematisch eine Lösung des Standes der Technik mittels des beschreibenen NAA (Network Access Arbitrator) wiedergibt.
Figuren 7/8/9 zeigen jeweils ein Blockdiagramm, welche schematisch eine erfindungsgemässe Lösung mittels eines virtuellen IP-Layers bzw. virtuellen IP-Device wiedergeben und den Unterschied zum Stand der Technik gemäss Figur 6 verdeutlichen.

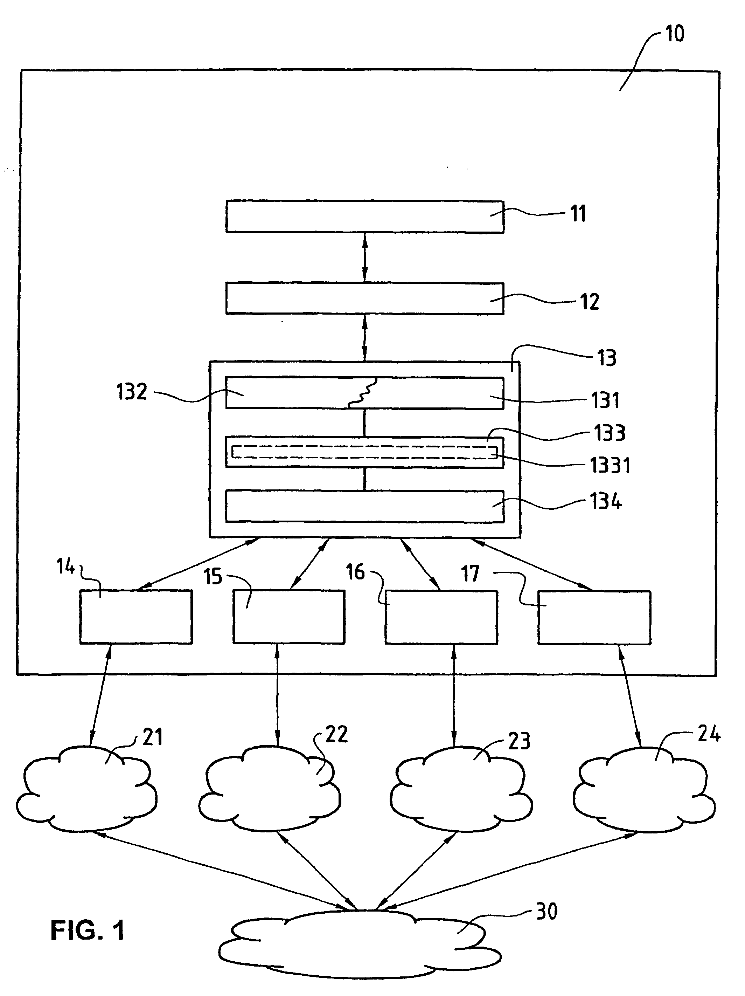

Figur 1 illustriert eine Architektur, die zur Realisierung der Erfindung verwendet werden kann. In der Figur 1 bezieht sich das Bezugszeichen 10 auf einen mobilen Node, welcher über die notwendige Infrastruktur, einschliesslich Hardware- und Softwarekomponenten verfügt, um ein beschriebenes erfindungsgemässes Verfahren und/oder System zu realisieren. Unter mobile Nodes 10 sind u.a. alle möglichen sog. Customer Premise Equipment (CPE) zu verstehen, die zur Benutzung an verschiedenen Netzwerkstandorten und/oder verschiedenen Netzwerken vorgesehen sind. Die mobilen CPEs oder Nodes 10 besitzen ein oder mehrere verschiedene physikalische Netzwerkschnittstellen 14 bis 17, die auch mehrere unterschiedliche Netzwerkstandards 21 bis 24 unterstützen können. Die physikalischen Netzwerkschnittstellen 14 bis 17 des mobilen Nodes können z.B. Schnittstellen zu Ethernet oder einem anderen Wired LAN (Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder WLAN (Wireless Local Area Network) etc. umfassen. Die Referenznummern 21 bis 24 stehen dementsprechend für die verschiedenen heterogenen Netzwerke, wie z.B. einem Wired LAN 21, d.h. einem lokalen Festnetz, insbesondere auch dem PSTN (Public Switched Telephone Network) etc., einem Bluetooth-Netzwerk 22, z.B. für Installationen in überdachten Örtlichkeiten, ein Mobilfunknetz 23 mit GSM und/oder UMTS etc. oder einem Wireless LAN. Die Schnittstellen 21 bis 24 können nicht nur packet-switched Schnittstellen, wie sie von Netzwerkprotokollen wie z.B. Ethernet oder Tokenring direkt benutzt werden, sondern auch circuit-switched Schnittstellen, die mittels Protokolle wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Die Referenznummer 30 bezeichnet das gewohnte, weltweite IP-Backbone-Netzwerk. Wie teilweise erwähnt, kann die Kommunikation über das Mobilfunknetz 23, beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal erfolgen. Auf der Ebene des mobilen Nodes 10 basiert das erfindungsgemässe Verfahren und System auf drei Hauptlayers bzw. Hauptmodulen 131 bis 133, die in Fig. 1 gemeinsam mit der Referenznummer 13 als Mobilmodul bezeichnet sind. Die Layers 131 bis 133 können getrennt oder gemeinsam realisiert sein, wobei sie entsprechend softwaremässig und/oder hardwaremässig realisiert sein können. Der erste Layer umfasst ein Mobile IP-Modul 131 und/oder ein IPsec-Modul 132. Die Hauptaufgabe des Mobile IP besteht darin, den mobilen Node 10 im Netz zu authentifizieren und die IP-Pakete, die den mobilen Node 10 als Zieladresse haben, entsprechend umzuleiten. Die Mobile IP Fähigkeiten 131 können vorzugsweise mit den Sicherheitsmechanismen eines IPsec (IP security protocol)-Moduls 132 kombiniert werden, um ein sicheres mobiles Datenmanagement im öffentlichen Internet 30 zu garantieren. Die Module des Mobile IP 131 und des IPsec 132 können als Ausführungsvariante auch in einem einzigen Sec MIP-Modul 131/132 (Secure Mobile IP Modul) gemeinsam ausgeführt sein, wie es in Fig. 1 gezeigt ist. Die Funktionsweise des Mobile IP-Moduls und des IPsec-Moduls werden weiter unten detaillierter beschrieben. Das SecMIP-Modul verwaltet die Datentunnels des Mobile IP 131 und IPsec 132, um eine sinnvolle Zusammenarbeit zwischen einem darüberliegenden Layers, z.B. einem TCP-Modul 12 bzw. auf dem mobilen Node 10 laufenden IP-Applikationen 11, und einem darunterliegenden Layer 134 zu ermöglichen. Insbesondere kontrolliert und koordiniert das SecMIP-Modul die zeitliche Abfolge der Operationen des Mobile IP-Moduls 131 und des IPsec-Moduls 132. Wie für das IP spielt es auch für das Mobile IP keine Rolle, welcher Netzwerkstandard oder Netzwerktyp für die Netzanbindung benutzt wird, solange das Internet Protokoll unterstützt wird. Somit erlaubt es das Mobile IP prinzipiell, den mobilen Node 10 in heterogenen Netzwerken 21-24 zu bewegen.

Beim Mobile IP ordnet ein Home-Agent eine temporäre Care-of-Adresse einer statischen Home-Adresse dynamisch zu, wenn der entsprechende mobile Node 10 in den heterogenen Netzwerken bewegt wird. Die dynamische Care-of-Adresse gibt wie erwähnt den topologisch aktuellen Netzwerkstandort des mobilen Nodes an, während die Home-Adresse den Standort im Heimnetz bezeichnet. Mit anderen Worten ist beim Home-Agenten folglich immer der aktuelle Standort des zugeordneten mobilen Nodes 10 registriert. Gleichzeitig leitet der Home-Agent die IP-Datenpakete mit der IP-Home-Adresse des mobilen Nodes als Zieladresse zur Care-of-Adresse des mobilen Nodes um, so dass der Home-Agent ähnlich einer Relaisstation zum mobilen Node 10 funktioniert. Diese Funktionen realisiert Mobile IP aufbauend auf dem normalen IP (Internet Protocol). Im Folgenden soll dies näher beschrieben werden: Im IP werden Datenpakete von einer Startadresse (Source Address) einer Netzwerkschnittstelle über verschiedene Routers im Netzwerk zu einer Zieladresse (Destination Address) einer Netzwerkschnittstelle geleitet (geroutet). Dabei dürfen von den einzelnen Routers die Datenpakete zerlegt (z.B. um heterogene Netzwerkstrukturen überwinden zu können) werden, über verschiedene Wege an die Zieladresse geroutet werden, zurückgehalten werden oder auch verworfen werden. Auf diesen Grundfunktionen basiert die grosse Flexibilität des IP. Die Routers leiten die Datenpakete basierend auf Routing-Tabellen weiter, die typischerweise die Next-Hop Information enthalten, d.h. Informationen darüber, welches den (die) als nächstes anzusteuernde Router basierend auf den Referenzzahlen der Netzwerke in der Zieladresse ist. Die Referenzzahlen der Netzwerke können in den Bits tiefer Ordnung der IP-Adresse im IP-Header des Datenpaketes entnommen werden. Die Zieladresse in den Datenpaketen spezifiziert also den genauen Ort der Zielnetzwerkschnittstelle im Netz. Um die bestehende IP-Transportstruktur aufrechterhalten zu können, muss im mobilen Node 10 die gleiche IP-Adresse aufrechterhalten werden können. Wird wie erwähnt zusätzlich zum IP noch das TCP (Transport Control Protocol) verwendet (was bei der überwiegenden Mehrheit der IP-Verbindungen der Fall ist), werden die Verbindungen weiter mit einem Zahlen-Quadruplet bezeichnet, das Angaben zur IP-Adresse und Port-Nummer sowohl der Startadresse wie auch der Zieladresse umfasst. Wird eine dieser vier Zahlen verändert, verursacht dies einen Abbruch der IP-Verbindung. Bei einer mobilen Netzwerkbenutzung hängt aber das richtige Routing der Datenpakete vom momentanen Standort des mobilen Nodes 10 im Netzwerk 21 - 24 und 30 ab. Um das Routing zu ändern kann die IP-Adresse des momentanen Standortes den Datenpaketen zugeordnet werden und zwar so, dass auch die TCP-Funktionen nicht gestört werden. Im Mobile IP werden diese Probleme durch das Zuordnen der beschriebenen zwei IP-Adressen, der Home-Adresse und der Care-of-Adresse gelöst. Die Home-Adresse ist statisch und gibt den Heimstandort des mobilen Nodes 10 an. Sie wird z.B. auch dazu genutzt, die TCP-Verbindung zu kennzeichnen. Die Care-of-Adresse wechselt bei jedem neuen Standort des mobilen Nodes 10 im Netz. Sie ist die topologisch signifikante Adresse des mobilen Nodes 10 bezüglich der Netzwerktopologie. Anhand der Home-Adresse kann der mobile Node 10 permanent Daten beim Standort seiner Home-Adresse im Heimnetz empfangen. Bei der Home-Adresse benötigt der mobile Node 10 aber einen weiteren Netzwerknode, der typischerweise als Home-Agent bezeichnet wird. Falls der mobile Node 10 sich nicht selbst im Heimnetz befindet, sammelt der Home-Agent die Datenpakete mit dem mobilen Node 10 als Zieladresse auf und leitet sie an die aktuelle Adresse des mobilen Nodes 10 um. Wo auch immer sich der mobile Node befindet, wird ein Mobile IP-Modul des mobilen Nodes 10 die neue bzw. aktuelle Adresse des mobilen Nodes 10 beim Home-Agenten bei Gebrauch sofort registrieren. Beim Umleiten der Datenpakete durch den Home-Agenten wird es notwendig, dass die Zieladresse der Datenpakete, welche der Home-Adresse entsprach, durch die momentane Care-of-Adresse ersetzt wird und die Datenpakete weitergeschickt werden. Wenn die Datenpakete beim mobilen Node angelangt sind, findet die umgekehrte Transformation statt, indem die Zieladresse, welcher jetzt der Care-of-Adresse entsprach, durch die Home-Adresse ersetzt wird. Dadurch können die ankommenden Datenpakete im mobilen Node 10 durch das Transfer Control Protocol (TCP) oder ein anderes übergeordnetes Protokoll ohne Fehlermeldung weiterverwendet werden. Zum Umleiten der Datenpakete von der Home-Adresse zur Care-of-Adresse konstruiert der Home-Agent einen neuen IP-Header für das entsprechende Datenpaket, der wie erwähnt die Care-Of-Adresse anstelle der Home-Adresse als Zieladresse umfasst. Der neue IP-Header umgibt das ursprüngliche Datenpaket als Ganzes, wodurch die alte Zieladresse keine Wirkung auf das weitere Routing mehr hat, bis das Datenpaket beim mobilen Node angekommen ist. Eine solche Verkapselung (Encapsulation) wird auch als Tunneln von Daten bezeichnet, was die Art beschreibt, wie die Daten durch das Internet "tunneln", indem sie die Wirkung des ursprünglichen IP-Headers umgehen. Das Mobile IP umfasst folglich als wesentliche Funktionen das Bestimmen der momentanen IP-Adresse (Care-Of-Adresse) des mobilen Nodes 10, das Registrieren der Care-Of-Adresse beim Home-Agenten und das Tunneln der Datenpakete mit der Home-Adresse als Zieladresse zur Care-Of-Adresse. Zu den weiteren Mobile IP Spezifikationen siehe z.B. auch IEFT (Internet Engineering Task Force) RFC 2002, IEEE Comm. Vol. 35 No. 5 1997 etc. Mobile IP unterstützt insbesondere IPv6 und IPv4.

IPsec (IP security protocol) erzeugt paketweise oder socketweise Authentifikations-/Vertraulichkeitsmechanismen zwischen Netzwerkknoten, die beide IPsec benutzen. IPsec besteht aus verschiedenen separaten Protokollen mit entsprechenden Kontrollmechanismen. IPsec umfasst einen Authentifikation Header (AH), einen Encapsulating Security Payload (ESP), eine IP payload compression (IPcomp) sowie ein Internet Key Exchange (IKE). Mittels des AH erzeugt IPsec eine Authentifikationsgarantie für die Datenpakete, indem den Datenpaketen eine stark verschlüsselte Datenprüfsumme (Checksum) zugeordnet wird. Mit dem AH kann die Authentizität des Absenders verifiziert werden und gleichzeitig überprüft werden, ob das Datenpaket durch einen unbefugten Dritten zwischenzeitlich modifiziert wurde. Die ESP-Verschlüsselung garantiert im weiteren die Vertraulichkeit der Daten, indem die Datenpakete mit einem Schlüssel verschlüsselt werden. Dies ist natürlich nur gegeben, falls der Schlüssel Dritten nicht bekannt gegeben wurde. Wie oben beschrieben benötigt AH wie auch ESP Schlüssel, die beiden teilnehmenden Netzwerkknoten bekannt sind. IKE schlussendlich ist ein Mechanismus, um solche geheimen Schlüssel zwischen zwei Konten zu vereinbaren, ohne dass die Schlüssel Dritten bekannt werden. Die IKE-Mechanismen bilden einen optionalen Teil des IPsec, da sie sich auch manuell für AH und ESP festlegen lassen. Eine der Flexibilitäten von IPsec liegt insbesondere darin, dass es sich paketweise aber auch für einzelne Sockets konfigurieren lässt. IPsec unterstützt IPvx, insbesondere IPv6 und IPv4. Für detailliertere IPsec-Spezifikationen siehe z.B. Pete Loshin: IP Security Architecture; Morgan Kaufmann Publishers; 11/1999 oder A Technical Guide to IPsec; James S et al.; CRC Press, LLC; 12/2000 etc. Obwohl IPsec bei diesem Ausführungsbeispiel als Beispiel für die Verwendung von Sicherheitsprotokollen gemäss der vorliegenden Erfindung beschrieben worden ist, sind alle möglichen anderen Sicherheitsprotokolle oder -mechanismen oder gar das Weglassen von Sicherheitsprotokollen erfindungsgemäss vorstellbar.

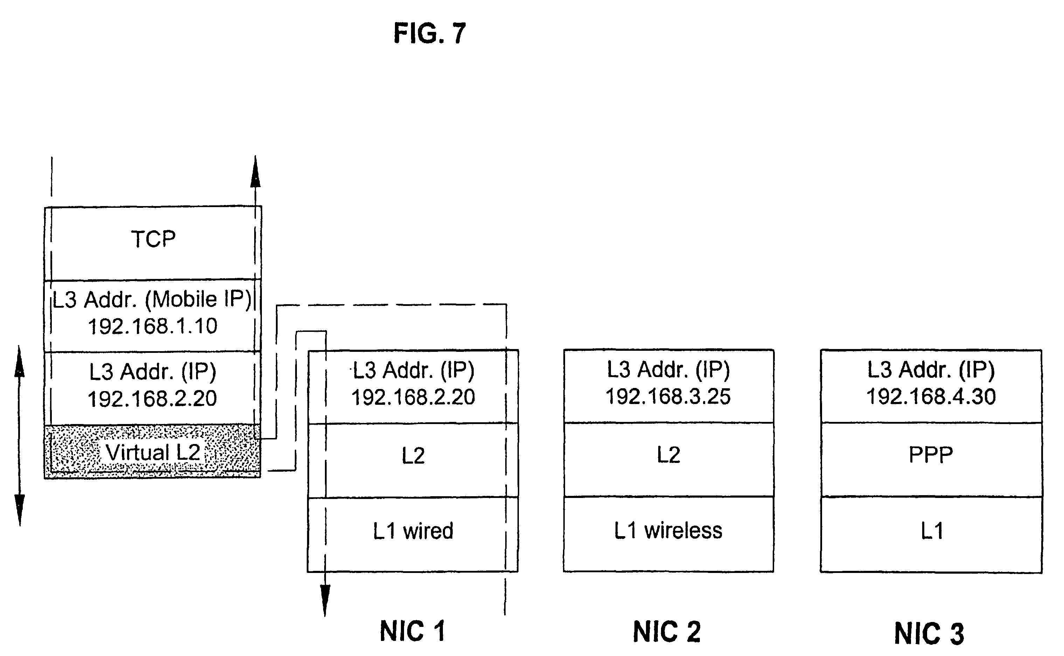

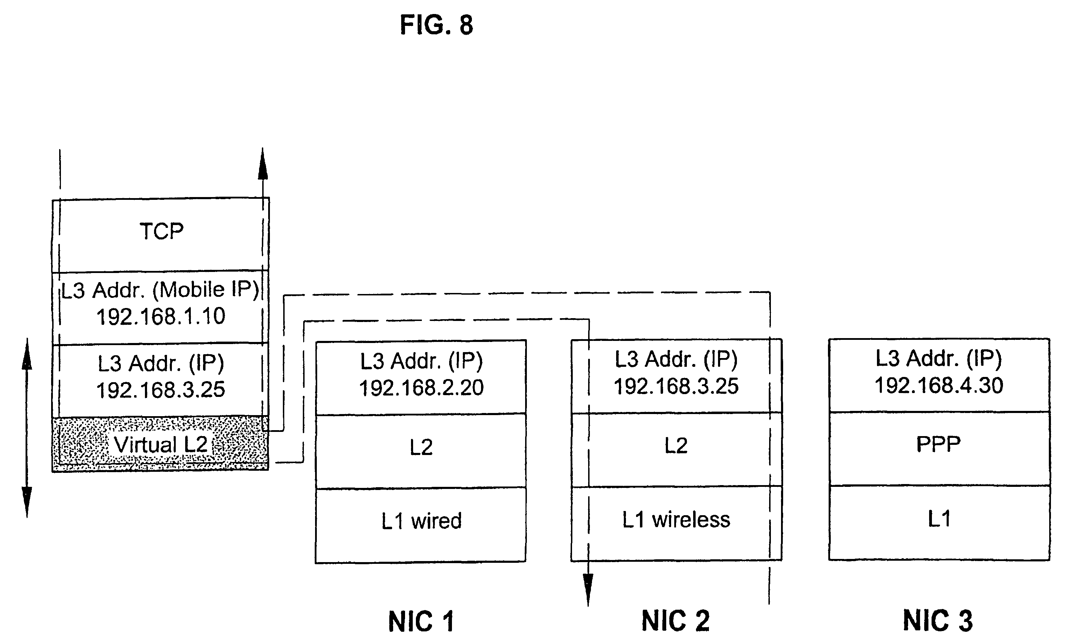

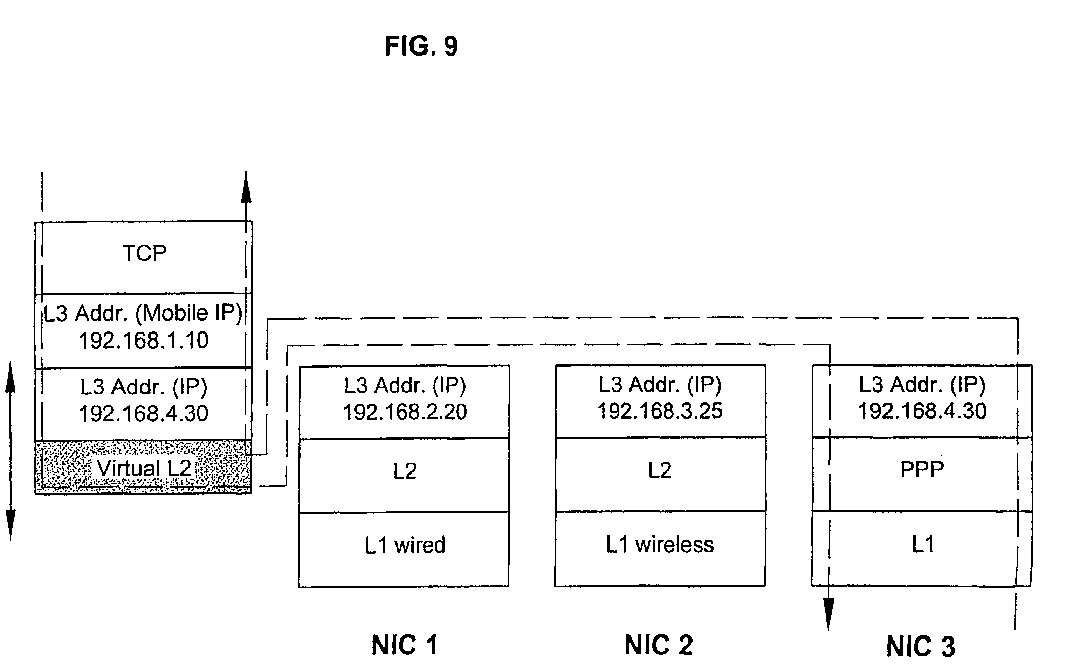

Die physikalischen Netzwerkschnittstellen 14-17 werden durch ein Schnittstellenverwaltungsmodul 134, das den Dritten der genannten Layer darstellt, verwaltet. Die virtuelle IP-Netzwerkschnittstelle 133 (in den Figuren 7 bis 9 als virtual L2-Layer bezeichnet) kann z.B. durch das Schnittstellenverwaltungsmodul 134 softwaremässig generiert sein. Sie ist als Bufferstelle zwischen dem ersten Layer 131/132, d.h. dem SecMIP-Modul, und dem dritten Layer 134, d.h. dem Schnittstellenverwaltungsmodul, realisiert. Die virtuelle Netzwerkschnittstelle 133 erzeugt einerseits gegenüber den IP-Applikationen 11 bzw. dem TCP-Layer 12 eine permanente IP-Netzwerkschnittstelle und ist anderseits an die aktuellen physikalischen Schnittstelle des mobile Nodes 10 mit der aktuellen Care-of-Adresse über das Schnittstellenverwaltungsmodul 134 zugeordnet. Das Schnittstellenverwaltungsmodul 134 überprüft den mobilen Node 10 nach verfügbaren physikalischen Netzwerkschnittstellen 14-17, erstellt dabei eine Lookup-Table mit den verfügbaren und konfigurierbaren physikalischen Netzwerkschnittstellen 14-17 und bindet sich an eine der verfügbaren physikalischen Netzwerkschnittstellen 14-17 an. Die Überprüfung der physikalischen Netzwerkschnittstellen 14-17 kann z.B. periodisch, d.h. nach Ablauf eines bestimmbaren Zeitfensters, geschehen, manuell konfigurierbar sein oder auf Request eines der in Fig. 1 auf geführten Layers oder des Kernels des mobilen Nodes 10. Die Lookup-Table kann insbesondere Informationen, wie mögliche Datendurchsatzrate, Netzverfügbarkeit, Netzstabilität, Kosten der Netzbenutzung etc. umfassen. Die Anbindung an eine bestimmte physikalische Schnittstelle 14-17 kann anhand bestimmbarer Kriterien basierend auf in der Lookup-Table gespeicherten Informationen erfolgen. Insbesondere kann es sinnvoll sein, dass das Schnittstellenverwaltungsmodul 134 die physikalische Schnittstelle 14-17 automatisch basierend auf Informationen der Lookup-Table wechselt und aktualisiert. Die Anbindung an eine bestimmte physikalische Schnittstelle 14-17 kann aber auch z.B. durch den Benutzer bestimmbar sein und/oder manuell erfolgen. Die virtuelle IP-Netzwerkschnittstelle bleibt wie erwähnt bei jedem beliebigen Wechsel oder Unterbrüchen, d.h. Zeit wo gar keine physikalische Schnittstelle 14-17, z.B bei einem zwischenzeitlichen herausnehmen der Netzwerkkarte aus dem mobilen Node 10, vorhanden ist, als permanent verfügbare IP-Schnittstelle erhalten. Die verfügbaren physikalischen Netzwerkschnittstellen können dynamisch konfiguriert werden, z.B. mittels einem DHCP-Service (DHCP: Dynamic Host Configuration Protocol), falls solche Mittel verfügbar sind, oder statisch, z.B. durch den Benutzer oder anhand vorgegebener Konfigurationsprofile. Über die so generierte permanente virtuelle IP-Schnittstelle können nun ein oder mehrere IP-Applikationen 11 des mobilen Nodes 10 auf die heterogenen Netzwerke 21-24 zugreifen. Wechselt der mobile Nodes 10 die physikalische Netzwerkschnittstelle 14-17 oder seinen topologischen Standort im Netz, kann die Anbindung an die physikalische Netzwerkschnittstelle basierend auf den Informationen der Lookup-Table über das Schnittstellenverwaltungsmodul 134 aktualisiert werden, ohne dass sich für das MobilelP-Modul 131 etwas ändern würde, da die virtuelle IP-Schnittstelle 131 durch den Wechsel nicht tangiert wird. Das IPsec-Modul 132 aktualisiert dabei die IPsec-Datentunnelkonfiguration gemäss der aktuellen Netzanbindung, worauf das MobilelP-Modul 131 die neue Care-of-Adresse beim Home-Agenten registriert, so dass das Routing der Datenpakete zum neuen Standort des mobilen Host stattfindet und aktualisiert die IP-Konfiguration falls notwendig beim Home-Agenten entsprechend der momentanen physikalischen Netzwerkschnittstelle. Die oben genannte Reihenfolge ist erfindungsgemäss, der Ablauf kann aber auch in umgekehrter Folge stattfinden.

Es bleibt zu erwähnen, dass in einem erweiterten Ausführungsbeispiel zum oben genannten Ausführungsbeispiel ausgehende IP-Datenpakete in einem Datenbuffer 1331 des mobilen Nodes 10 gebuffert werden können, falls die Netzanbindung des mobilen Nodes 10 unterbrochen wird, so dass die Outputdatenrate der ein oder mehreren IP-Applikationen 11 mittels des Datenbuffers 1331 für eine bestimmte Bufferzeit aufrechterhalten oder innerhalb einer bestimmten Schwankungstoleranz gehalten werden kann, d.h. solange die Speicherkapazität des Datenbuffers 1331 zum Speichern der Datenpakete ausreicht. Falls der Netzwerkanbindungsunterbruch so innerhalb des z.B. im TCP vorgesehenen Zeitfensters für ein Verbindungstimeout liegt, kann die Outputdatenrate für die IP-Applikationen 11 so gehalten werden, dass keine automatische Verzögerung der Outputrate durch die IP-Applikationen stattfindet. Die Speicherung der Datenpakete kann z.B. kontinuierlich gleich oder gemäss der Zeitdauer des Unterbruchs stetig langsamer stattfinden. Es ist darauf hinzuweisen, dass gerade bei Realtime-Applikationen der Datenbuffer 1331 eine wichtige Rolle spielen kann, um bei einem Wechsel des topologischen Netzwerkstandortes Unterbrüche und Datenverlust zu minimieren. Der Datenbuffer 1331 kann in einem Ausführungsbeispiel hardware- oder softwaremässig der virtuellen Netzwerkschnittstelle 131 zugeordnet oder integriert realisert sein, er kann aber auch separat im mobilen IP-Node realsiert sein.

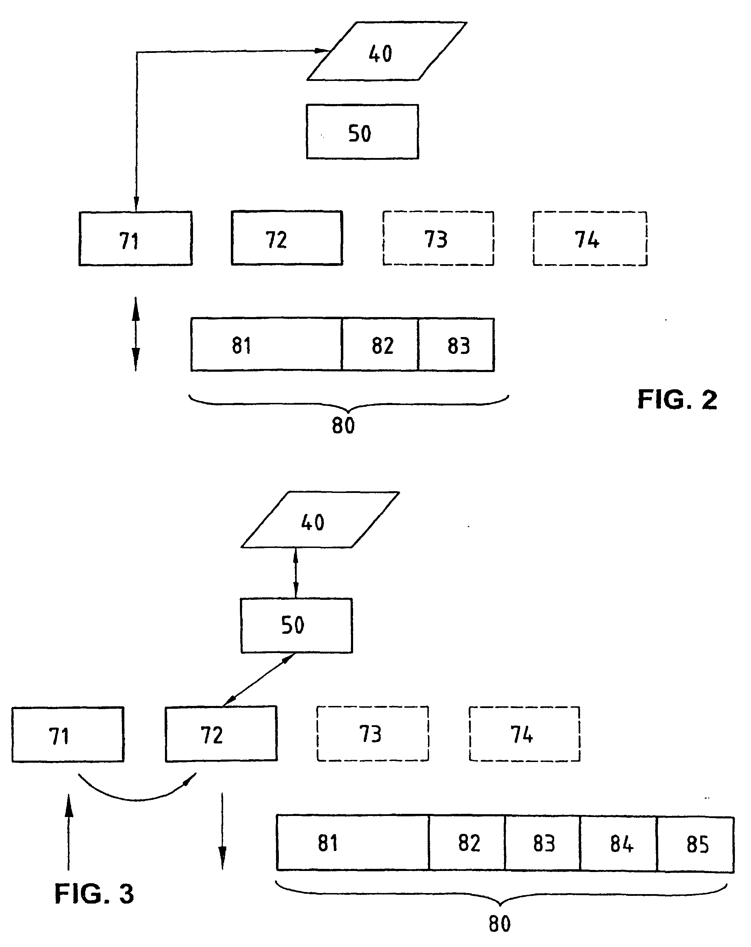

Fig. 2 und Fig. 3 zeigen normales MobilelP ohne das erfindungsgemässe Verfahren oder das erfindungsgemässe System. In Fig. 1 befindet sich der mobile Node im Heimnetzwerk 71. Die Referenznummern 72 bis 74 bezeichnen jeweils unterschiedliche topologische Neztwerkstandorte. Dies können auch heterogene Netzwerke sein. Beispielsweise kann das Heimnetz 71 eine Ethernet-LAN-Anbindung sein, 72 eine WLAN (Wireless Local Area Network)-Anbindung etc. Hinausgehende Datenpakete besitzen die IP-Adresse des Zielnodes im Netz 30 als Destinationsadresse. MobilelP ist nicht notwendig und kein MobilelP-Tunneling 50 findet statt. Empfangene Datenpakete 80 sieht die IP-Schnittstelle 40 des mobilen Nodes die Datenpakete, ohne dass sie modifiziert wurden, d.h. die Sourceadresse 82 gibt die IP-Adresse des Zielnodes an und die Destinationsadresse 83 die Home-IP-Adresse des mobilen Nodes. Die gesendeten Datenpakete 80 haben bezüglich ihrem IP-Header umgekehrte IP-Adressfolgen. Die Referenznummer 81 bezeichnet die mitgeschickten Daten ohne IP-Header. In Fig. 3 befindet sich der mobile Node nicht im Heimnetz 71, sondern an einem topologisch anderen Netzwerkstandort, beispielsweise im WLAN 72. Bei den gesendeten Datenpaketen 80 gibt jetzt die Sourceadresse 84 die IP-Adresse des topologisch aktuellen Netzwerkstandort an, während die Destinationsadresse 85 die IP-Adresse des entsprechenden Zielnodes angibt. Bei den empfangenen IP-Datenpaketen wird der umgekehrte neue IP-Header vom Home-Agenten den Datenpaketen 80 zugeordnet, wobei sich der alte Header mit der alten Adresse 82/83 verkapselt darunter befindet. Die Referenznummer 81 bezeichnet auch hier die mitgeschickten Daten ohne IP-Headers. Bei den gesendeten bzw. empfangenen Datenpaketen 80 sind die Sourceadressen 82/84 und die Destinationsadressen 83/85 entsprechend vertauscht.

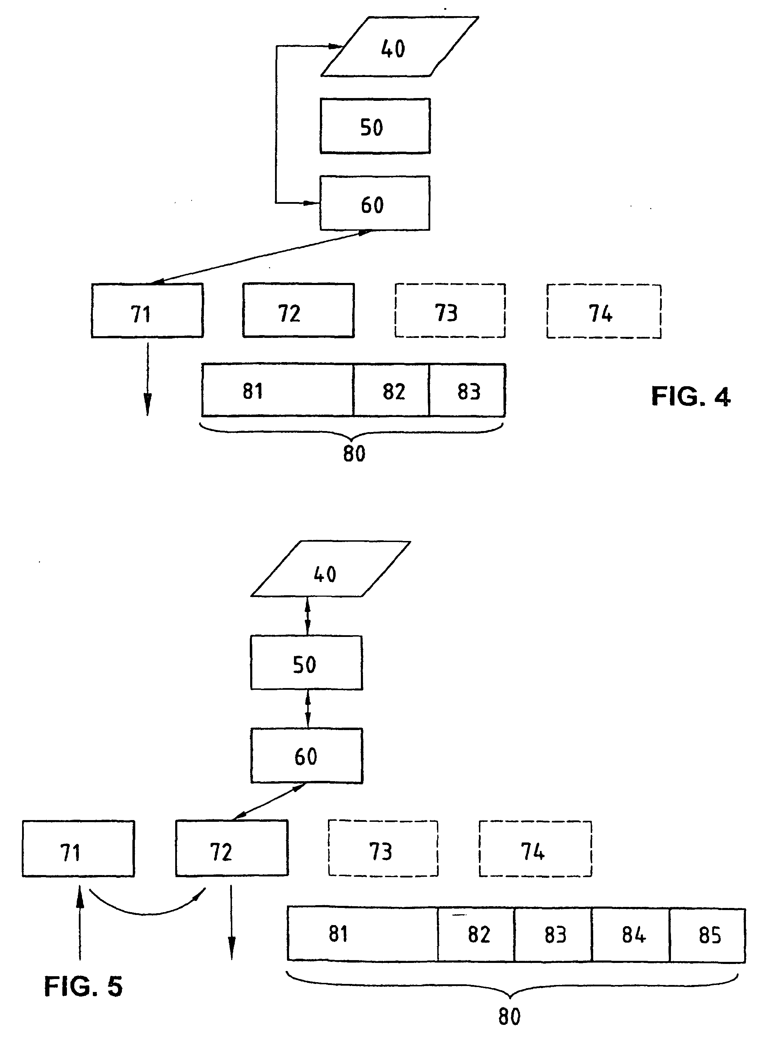

Fig. 4 und Fig. 5 zeigen MobilelP mit dem erfindungsgemässen Verfahren oder dem erfindungsgemässe System, d.h. mit der erfindungsgemässen virtuellen IP-Schnittstelle 60. Die Referenznummern gleicher Zahl bezeichnen in Fig. 4 und Fig. 5 die gleichen Objekte wie in Fig. 2 und Fig. 3 und werden nicht mehr weiter beschrieben. Befindet sich der mobile Node im Heimnetz 71 (siehe Fig. 4), so übernimmt die virtuelle IP-Schnittstelle 60 die Home-Adresse des mobilen Node und der Home-Agent hat nichts weiter zu tun, d.h. MobilelP ist nicht notwendig und MobilelP-Tunneling 50 findet nicht statt. Die virtuelle IP-Netzwerkschnittstelle 60 des mobilen Nodes sieht die empfangenen Datenpakete 80, ohne dass sie modifiziert wurden, d.h. die Sourceadresse 82 gibt die IP-Adresse des entsprechenden Node an und Destinationsadresse 83 die Home-IP-Adresse des mobilen Nodes. Bei den gesendete Datenpaketen 80 gibt die Destinationsadresse 83 die IP-Adresse des entsprechenden Zielnodes im Netz an, während die Sourceadresse 82 die IP-Adresse der virtuellen IP-Netzwerkschnittstelle, die der Home-IP-Adresse des mobilen Nodes entspricht, angibt. Die Referenznummer 81 bezeichnet die mitgeschickten Daten ohne IP-Header. Bei Fig. 5 befindet sich der mobile Node nicht im Heimnetz und die Datenpakete erhalten im IP-Header die topologisch aktuelle IP-Adresse 71 als Source- bzw. Destinationsadresse 84/85, je nachdem, ob sie geschickt oder empfangen werden. Die erfindungsgemässe virtuelle IP-Netzwerkschnittstelle 133 übernimmt folglich jeweils die IP-Adresse der momentan aktuellen physikalischen Schnittstelle 14-17, wobei das MobilelP-Modul 131 das Management der IP-Adressen der IP-Header der Datenpaktet 80 und das Erzeugen des Datentunnels (falls notwendig) in der konventionellen Art übernimmt. Gleichzeitig gewährleistet die virtuelle IP-Netzwerkschnittstelle 133 das permanente Vorhandensein einer Schnittstelle gegenüber den IP-Applikationen.

Es ist wichtig festzustellen, dass die virtuelle IP-Schnittstelle als Ausführungsvariante nicht nur an eine physikalische Schnittstelle angebunden sein kann, sondern an mehrere physikalische Schnittstellen gleichzeitig. So ist es für den mobilen Node 10 dann z.B. möglich, über zwei physikalische Schnittstellen gleichzeitig das gleiche Datenpaket zu erhalten. Redundante IP-Datenpakete werde in höheren IP-Layern automatisch erkannt und entsprechend reduziert. Durch das gleichzeitige Verschicken von IP-Datenpaketen und das parallele Erhalten der gleichen IP-Datenpakete durch zwei physikalische Schnittstellen kann der nahtlose Übergang von einer physikalischen Schnittstelle zu einer anderen durch den mobilen Node 10 gewährleistet werden. Bei diesem Verfahren werden einem mobilen Node 10 mindestens zwei Care-of-Adressen entsprechend den momentan an die virtuelle IP-Schnittstelle angebundenen physikalischen Schnittstellen zugeordnet. Sind mehr als zwei physikalischen Schnittstellen gleichzeitig angebunden, erhöht sich die Anzahl zugeordneter Care-of-Adressen entsprechend. Der Home-Agent rootet die IP-Datenpakete, welche die Home-Adresse des mobilen Nodes 10 im IP-Header besitzen, entsprechend der genannten Mehrfach- Registrierung parallel an die verschiedenen registrierten Care-of-Adressen, d.h. an verschiedene physikalische Schnittstellen des mobilen Nodes 10.

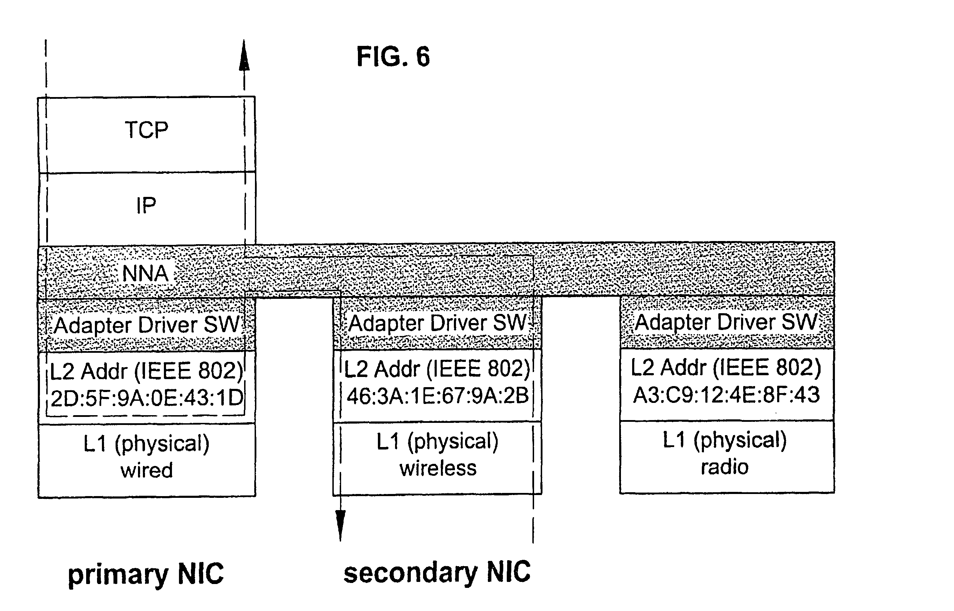

Figur 6 zeigt eine Lösung des Standes der Technik, wie er z.B. in der Patentschrift EP 1089495 gezeigt wird. Dabei sorgt ein sogenanter Network Access Arbitrator (NAA) dafür, dass die unterschiedlichen MAC-Adressen (L2 Addr (IEEE 802) 2D:5F:9A:0E:43:1 D, L2 Addr (IEEE 802) 46:3A:1 E:67:9A:2B, L2 Addr (IEEE 802) A3:C9:12:4E:8F:43) der einzelnen verfügbaren physikalischen Netzwerkschnittstellen (L1 (Physical) wired, L1 (physical) wireless, L1 (physical) radio) über eine einzige feste MAC-Adresse (L2 Addr (IEEE 802) 2D:5F:9A:0E:43:1D) umgeleitet werden. Diese erste MAC-Adresse ist die Adresse des sog. primary NIC, während alle übrigen physikalischen Schnittstellen jeweils secondary NICs sind. Der NAA verbindet die L2-Layer der vorhandenen NICs, indem er eben die Datenpakete vom primary NIC zu der entsprechenden MAC-Adresse einer weiteren Netzwerkschnittstelle (secondary NIC) umleitet. Dabei wird jedoch keine virtuelle Schnittstelle generiert, sondern der NAA leitet die MAC-Adresse über die MAC-Adresse des primary NICs auf die eines secondary NICs um. Der NAA agiert dabei als virtual adapter driver. So werden die ausgehenden Datenpakete auf die aktuelle Schnittstelle umgeleitet, während hereinkommende Datenpakete direkt zum IP-Layer geleitet werden. Mit dem NAA wird somit keine virtuelle Netzwerkschnittstelle erzeugt, sondern der NAA leitet die Datenpakete einfach um. Wie aus Figur 6 klar ersichtlich ist, braucht der NAA mindestens eine physikalische Schnittstelle mit einer MAC-Adresse, nämlich den primary NIC, um zu funktionieren. Wird der primary NIC entfernt, verlieren die IP-Applikationen ihre Anbindung an den Layer L2, da der NAA über den primary NIC umleitet.

Figuren 7/8/9 zeigen jeweils ein Blockdiagramm, welche schematisch eine erfindungsgemässe Lösung mittels eines virtuellen IP-Layers bzw. IP-Device wiedergeben und den Unterschied zum Stand der Technik gemäss Figur 6 verdeutlichen. Im Vergleich zum Stand der Technik aus Figur 6 wird dabei eine echte virtuelle IP-Schnittstelle 133 generiert. Das Schnittstellenverwaltungsmodul 134 (in Figur 7 bis 9 nicht gezeigt) bindet die jeweilige physikalische Schnittstelle 14-17 an die virtuelle Schnittstelle 133 an, während die IP-Applikationen über den IP-Layer auf die virtuelle IP-Schnittstelle 133 zugreifen. Die virtuelle IP-Schnittstelle 133 wird vom Schnittstellenverwaltungsmodul 134 permanent aufrechterhalten, unabhängig ob überhaupt eine physikalische Netzwerkschnittstelle 14-17 vorhanden ist. Die laufenden IP-Applikationen finden deshalb immer die IP-Schnittstelle 133 vor, womit es bei einem Wechsel der Schnittstelle zu keinem Unterbruch kommt. Aus den Figuren 7 bis 9 geht klar hervor, dass es sich bei der vorliegenden Erfindung nicht lediglich um ein Umleiten von Datenpaketen handelt, sondern dass eine echte virtuelle IP-Schnittstelle 133 erzeugt wird. Insbesondere hat das Eingreifen auf einer höheren Stufe der Abstraktion, d.h. des Layers zusätzlich die Vorteile, dass man unabhängig von Standards, wie z.B. Hardwareadressen, ist.

## Patentansprüche

1. Verfahren für mobile IP-Nodes (10) in heterogenen Netzwerken (21-24), bei welchem ein Home-Agent eine temporäre IP-Care-of-Adresse einer statischen IP-Home-Adresse dynamisch zuordnet, wenn der mobile Node (10) in den heterogenen Netzwerken (21-24) bewegt wird, wobei die dynamische Care-of-Adresse den topologisch aktuellen Netzwerkstandort des mobilen Nodes (10) angibt und wobei IP-Datenpakete mit der IP-Home-Adresse des mobilen Nodes (10) als Zieladresse zur Care-of-Adresse des mobilen Nodes umgeleitet werden, **dadurch gekennzeichnet,**
**dass** ein Schnittstellenverwaltungsmodul (134) des mobilen Nodes (10) den mobilen Node (10) nach verfügbaren physikalischen Netzwerkschnittstellen (14-17) überprüft, eine Lookup-Table mit den verfügbaren und konfigurierbaren physikalischen Netzwerkschnittstellen (14-17) erstellt und sich an eine der verfügbaren physikalischen Netzwerkschnittstellen (14-17) anbindet,
**dass** ein oder mehrere IP-Applikationen (11) des mobilen Nodes (10) über eine im mobilen Node (10) generierte virtuelle IP-Netzwerkschnittstelle (133) auf die heterogenen Netzwerke (21-24) zugreifen, wobei die permanente generierte virtuelle IP-Netzwerkschnittstelle (133) über das Schnittstellenverwaltungsmodul (134) mit dem aktuellen Netzwerk (21-24) verbunden ist, und
**dass** bei einem Wechsel der physikalischen Netzwerkschnittstelle (14-17) des mobilen Nodes (10) die Anbindung der permanenten virtuellen IP-Netzwerkschnittstelle (133) an das Netzwerk (21-24) mittels des Schnittstellenverwaltungsmoduls (134) basierend auf der Lookup-Table aktualisiert wird.

2. Verfahren für mobile IP-Nodes (10) in heterogenen Netzwerken (21-24) nach Anspruch 1, **dadurch gekennzeichnet, dass** das Schnittstellenverwaltungsmodul (134) den mobilen Node (10) nach verfügbaren physikalischen Netzwerkschnittstellen (14-17) periodisch überprüft.

3. Verfahren für mobile IP-Nodes (10) in heterogenen Netzwerken (21-24) nach Anspruch 2, **dadurch gekennzeichnet, dass** die virtuelle IP-Schnittstelle (133) über das Schnittstellenverwaltungsmodul (134) automatisch basierend auf Informationen der Lookup-Table die physikalischen Schnittstellen (14-17) wechselt und aktualisiert.

4. Verfahren für mobile IP-Nodes (10) in heterogenen Netzwerken (21-24) nach Anspruch 3, **dadurch gekennzeichnet, dass** die Kriterien für den automatischen Wechsel der physikalischen Schnittstelle (14-17) durch das Schnittstellenverwaltungsmodul (134) durch den Benutzer bestimmt werden.

5. Verfahren für mobile IP-Nodes (10) in heterogenen Netzwerken (21-24) nach Anspruch 1, **dadurch gekennzeichnet, dass** die verfügbaren physikalischen Netzwerkschnittstellen (14-17) dynamisch konfiguriert werden.

6. Verfahren für mobile IP-Nodes (10) in heterogenen Netzwerken (21-24) nach Anspruch 1, **dadurch gekennzeichnet, dass** die verfügbaren physikalischen Netzwerkschnittstellen (14-17) statisch konfiguriert werden.

7. Verfahren für mobile IP-Nodes (10) in heterogenen Netzwerken (21-24) nach Anspruch 1, **dadurch gekennzeichnet, dass** ausgehenden IP-Datenpakete in einem Datenbuffer (1331) des mobilen Nodes (10) gebuffert werden, falls die Netzanbindung des mobilen Nodes (10) unterbrochen wird, so dass die Outputdatenrate der ein oder mehreren IP-Applikationen (11) mittels des Datenbuffers (1331) aufrechterhalten oder innerhalb einer bestimmten Schwankungstoleranz gehalten wird.

8. Verfahren für mobile IP-Nodes (10) in heterogenen Netzwerken (21-24) nach Anspruch 3, **dadurch gekennzeichnet, dass** ausgehende IP-Datenpakete in einem Datenbuffer (1331) des mobilen Nodes (10) gebuffert werden, falls die Netzanbindung des mobilen Nodes (10) unterbrochen wird, so dass die Outputdatenrate der ein oder mehreren IP-Applikationen (11) mittels des Datenbuffers (1331) aufrechterhalten oder innerhalb einer bestimmten Schwankungstoleranz gehalten wird.

9. System für mobile IP-Nodes (10) in heterogenen Netzwerken (21-24), welches System ein Home-Agent zur dynamischen Zuordnung einer temporären IP-Care-of-Adresse zu einer statischen IP-Home-Adresse, wenn der mobile Node in den heterogenen Netzwerken (21-24) bewegt wird, wobei die dynamische Care-of-Adresse den topologisch aktuellen Netzwerkstandort des mobilen Nodes (10) angibt und zum Umleiten der IP-Datenpakete mit der IP-Home-Adresse des mobilen Nodes als Zieladresse zur Care-of-Adresse des mobilen Nodes (10), umfasst, **dadurch gekennzeichnet,**
**dass** der mobile Node (10) ein Schnittstellenverwaltungsmodul (134) umfasst, wobei das Schnittstellenverwaltungsmodul (134) Mittel zur Überprüfung des mobilen Nodes (10) nach verfügbaren physikalischen Netzwerkschnittstellen (14-17) umfasst und Mittel zum Anbinden an eine der verfügbaren physikalischen Netzwerkschnittstellen (14-17) umfasst,
**dass** das Schnittstellenverwaltungsmodul (134) Mittel zum Erstellen einer Lookup-Table der momentan verfügbaren und konfigurierbaren physikalischen Netzwerkschnittstellen (14-17) umfasst,
**dass** der mobile Node (10) eine permanent generierte, virtuelle IP-Netzwerkschnittstelle (133) umfasst, die über das Schnittstellenverwaltungsmodul (134) mit dem aktuellen Netzwerk (21-24) verbunden ist, wobei bei einem Wechsel der physikalischen Netzwerkschnittstelle (14-17) des mobilen Nodes (10) die Anbindung der permanenten virtuellen IP-Netzwerkschnittstelle (133) an das Netzwerk (21-24) mittels des Schnittstellenverwaltungsmoduls (134) basierend auf der Lookup-Table aktualisiert wird.

10. System für mobile IP-Nodes (10) in heterogenen Netzwerken (21-24) nach Anspruch 9, **dadurch gekennzeichnet, dass** die Überprüfung des mobilen Nodes (10) nach verfügbaren physikalischen Netzwerkschnittstellen (14-17) durch das Schnittstellenverwaltungsmodul (134) periodisch ist.

11. System für mobile IP-Nodes (10) in heterogenen Netzwerken (21-24) nach Anspruch 10, **dadurch gekennzeichnet, dass** der mobile Node (10) Kriterien umfasst, anhand welcher automatisch basierend auf Informationen der Lookup-Table die physikalische Netzwerkschnittstelle (14-17) gewechselt und aktualisiert wird.

12. System für mobile IP-Nodes (10) in heterogenen Netzwerken (21-24) nach Anspruch 11, **dadurch gekennzeichnet, dass** die Kriterien für den automatischen Wechsel der physikalischen Netzwerkschnittstelle (14-17) durch den Benutzer bestimmbar sind.

13. System für mobile IP-Nodes (10) in heterogenen Netzwerken (21-24) nach Anspruch 9, **dadurch gekennzeichnet, dass** der mobile Node (10) Mittel zum dynamischen Konfigurieren verfügbarer physikalischer Netzwerkschnittstellen (14-17) umfasst.

14. System für mobile IP-Nodes (10) in heterogenen Netzwerken (21-24) nach Anspruch 9, **dadurch gekennzeichnet, dass** der mobile Node (10) Mittel zum statischen Konfigurieren verfügbarer physikalischer Netzwerkschnittstellen (14-17) umfasst.

15. System für mobile IP-Nodes (10) in heterogenen Netzwerken (21-24) nach Anspruch 9, **dadurch gekennzeichnet, dass** der mobile Node (10) einen Datenbuffer (1331) umfasst, in welchem ausgehende IP-Datenpakete gebuffert werden, falls die Netzanbindung des mobilen Nodes (10) unterbrochen wird, so dass die Outputdatenrate der einen oder mehreren IP-Applikationen (11) mittels des Datenbuffers (1331) aufrechterhalten oder innerhalb einer Schwankungstoleranz gehalten wird.

16. System für mobile IP-Nodes (10) in heterogenen Netzwerken (21-24) nach Anspruch 11, **dadurch gekennzeichnet, dass** der mobile Node (10) einen Datenbuffer (1331) umfasst, in welchem ausgehende IP-Datenpakete gebuffert werden, falls die Netzanbindung des mobilen Nodes (10) unterbrochen wird, so dass die Outputdatenrate der einen oder mehreren IP-Applikationen (11) mittels des Datenbuffers (1331) aufrechterhalten oder innerhalb einer Schwankungstoleranz gehalten wird.

## Claims

1. Method for mobile IP nodes (10) in heterogeneous networks (21-24), in which a home agent dynamically assigns a temporary IP care-of address to a static IP home address when the mobile node (10) is moved in the heterogeneous networks (21 - 24), the dynamic care-of address indicating the topologically current network location of the mobile node (10) and IP data packets having the IP home address of the mobile node (10) as destination address being redirected to the care-of address of the mobile node, **characterised**
**in that** an interface administration module (134) of the mobile node (10) checks the mobile node (10) for available physical network interfaces (14-17), draws up a lookup table with the available and configurable physical network interfaces (14-17), and links itself to one of the available physical network interfaces (14-17),
**in that** one or more IP applications (11) of the mobile node (10) access the heterogeneous networks (21-24) via a virtual IP network interface (133) generated in the mobile node (10), the generated permanent virtual IP network interface (133) being linked to the current network (21-24) via the interface administration module (134), and
**in that** during a change of the physical network interface (14 - 17) of the mobile node (10), the link of the permanent virtual IP network interface (133) to the network (21-24) is updated based on the lookup table by means of the interface administration module (134).

2. Method for mobile IP nodes (10) in heterogeneous networks (21-24) according to claim 1, **characterised in that** the interface administration module (134) checks the mobile node (10) for available physical network interfaces (14-17) periodically.

3. Method for mobile IP nodes (10) in heterogeneous networks (21-24) according to claim 2, **characterised in that** the virtual IP interface (133) changes and updates the physical interfaces (14-17) automatically via the interface administration module (134) based on information of the lookup table.

4. Method for mobile IP nodes (10) in heterogeneous networks (21-24) according to claim 3, **characterised in that** the criteria for the automatic change of the physical interface (14-17) through the interface administration module (134) are determined by the user.

5. Method for mobile IP nodes (10) in heterogeneous networks (21-24) according to claim 1, **characterised in that** the available physical network interfaces (14-17) are dynamically configured.

6. Method for mobile IP nodes (10) in heterogeneous networks (21-24) according to claim 1, **characterised in that** the available physical network interfaces (14-17) are statically configured.

7. Method for mobile IP nodes (10) in heterogeneous networks (21-24) according to claim 1, **characterised in that** outgoing IP data packets are buffered in a data buffer (1331) of the mobile node (10) if the network link of the mobile node (10) is interrupted, so that the output data rate of the one or more IP applications (11) is maintained by means of the data buffer (1331) or is kept within a particular fluctuation tolerance.

8. Method for mobile IP nodes (10) in heterogeneous networks (21-24) according to claim 3, **characterised in that** outgoing IP data packets are buffered in a data buffer (1331) of the mobile node (10) if the network link of the mobile node (10) is interrupted, so that the output data rate of the one or more IP applications (11) is maintained by means of the data buffer (1331) or is kept within a particular fluctuation tolerance.

9. System for mobile IP nodes (10) in heterogeneous networks (21-24), which system comprises a home agent for dynamic assignment of a temporary IP care-of address to a static IP home address when the mobile node (10) is moved in the heterogeneous networks (21 - 24), the dynamic care-of address indicating the topologically current network location of the mobile node (10) and for redirecting IP data packets with the IP home address of the mobile node (10) as destination address to the care-of address of the mobile node (10), **characterised**
**in that** the mobile node (10) comprises an interface administration module (134), the interface administration module (134) comprising means for checking the mobile node (10) for available physical network interfaces (14-17) and means for linking to one of the available physical network interfaces (14-17),
**in that** the network administration module (134) comprises means for drawing up a lookup table of the momentarily available and configurable physical network interfaces (14-17),
**in that** the mobile node (10) comprises a permanently generated, virtual IP network interface (133) which is linked to the current network (21-24) via the interface administration module (134), the link of the permanent virtual IP network interface (133) to the network being updated by means of the interface administration module (134) based on the lookup table during a change of the physical network interface (14-17) of the mobile node (10).

10. System for mobile IP nodes (10) in heterogeneous networks (21-24) according to claim 9, **characterised in that** the checking of the mobile node (10) for available physical network interfaces (14-17) by the interface administration module (134) is periodic.

11. System for mobile IP nodes (10) in heterogeneous networks (21-24) according to claim 10, **characterised in that** the mobile node (10) includes criteria according to which the physical network interface (14-17) is changed and updated automatically based on information of the lookup table.

12. System for mobile IP nodes (10) in heterogeneous networks (21-24) according to claim 11, **characterised in that** the criteria for the automatic change of the physical interface (14-17) are determined by the user.

13. System for mobile IP nodes (10) in heterogeneous networks (21-24) according to claim 9, **characterised in that** the mobile node (10) comprises means for dynamic configuration of available physical network interfaces (14-17).

14. System for mobile IP nodes (10) in heterogeneous networks (21-24) according to claim 9, **characterised in that** the mobile node (10) comprises means for static configuration of available physical network interfaces (14-17).

15. System for mobile IP nodes (10) in heterogeneous networks (21-24) according to claim 9, **characterised in that** the mobile node (10) comprises a data buffer (1331) in which outgoing IP data packets are buffered if the network link of the mobile node (10) is interrupted, so that the output data rate of the one or more IP applications (11) is maintained by means of the data buffer (1331) or is kept within a fluctuation tolerance.

16. System for mobile IP nodes (10) in heterogeneous networks (21-24) according to claim 11, **characterised in that** the mobile node (10) comprises a data buffer (1331) in which outgoing IP data packets are buffered if the network link of the mobile node (10) is interrupted, so that the output data rate of the one or more IP applications (11) is maintained by means of the data buffer (1331) or is kept within a fluctuation tolerance.

## Revendications

1. Procédé pour noeuds mobiles IP (10) dans des réseaux hétérogènes (21-24), dans lequel un agent mère (Home Agent) attribue dynamiquement une adresse IP temporaire dite Care-of à une adresse mère statique IP (Home), quand le noeud mobile (10) est déplacé dans les réseaux hétérogènes (21-24), dans lequel l'adresse dynamique Care-of indique l'emplacement actuel topologique de réseau du noeud mobile (10), et des paquets de données IP avec l'adresse IP mère (home) du noeud mobile (10) sont dérivés en tant qu'adresse cible à l'adresse Care-Of du noeud mobile, **caractérisé en**
**ce qu'**un module de gestion d'interface (134) du noeud mobile (10) examine les interfaces de réseau physiques disponibles (14-17) du noeud mobile (10), **en ce qu'**une table de conversion est établie avec les interfaces de réseau disponibles et physiques configurables (14-17) et est reliée aux interfaces de réseau disponibles et physiques configurables (14-17),
**en ce que** une ou plusieurs application IP (11) du noeud mobile (10) ont accès aux réseaux hétérogènes (21-24) par une interface de réseau IP virtuelle (133) générée dans le noeud mobile (10), l'interface permanente (133) de réseau IP virtuelle générée étant reliée au réseau actuel (21-24) par le module de gestion d'interface (134), et
**en ce que** lors d'un changement de interface de réseau physique (14-17) du noeud mobile (10), la liaison de l'interface IP de réseau permanente virtuelle (133) au réseau (21-24) est actualisée au moyen du module de gestion d'interface (134) basé sur la table de conversion.

2. Procédé pour noeuds mobiles IP (10) dans des réseaux hétérogènes (21-24) selon la revendication 1, **caractérisé en ce que** le moyen du module de gestion d'interface (134) vérifie périodiquement les interfaces de réseau physiques disponibles (14-17) du noeud mobile (10).

3. Procédé pour noeuds IP mobiles (10) dans des réseaux hétérogènes (21-24) selon la revendication 2, **caractérisé en ce que** l'interface IP virtuelle (133) change et actualise les interfaces physiques (14-17) par l'intermédiaire du moyen du module de gestion d'interface (134) de manière automatique en se basant sur des informations de la table de conversion.

4. Procédé pour noeuds IP mobiles (10) dans des réseaux hétérogènes (21-24) selon la revendication 3, **caractérisé en ce que** les critères pour le changement automatique de l'interface physique (14-17) sont définis au moyen du module de gestion d'interface (134) par l'utilisateur.

5. Procédé pour noeuds IP mobiles (10) dans des réseaux hétérogènes (21-24) selon la revendication 1, **caractérisé en ce que** les interfaces de réseau physiques disponibles (14-17) sont configurées dynamiquement.

6. Procédé pour noeuds IP mobiles (10) dans des réseaux hétérogènes (21-24) selon la revendication 1, **caractérisé en ce que** les interfaces de réseau physiques disponibles (14-17) sont configurées statiquement.

7. Procédé pour noeuds IP mobiles (10) dans des réseaux hétérogènes (21-24) selon la revendication 1, **caractérisé en ce que** des paquets de données IP sortantes sont bufférisés dans une mémoire tampon de données (1331) du noeud mobile (10), si la connexion réseau du noeud mobile (10) est interrompue de sorte que le flux des données de sorties d'une ou de plusieurs applications IP (11) est conservé ou maintenu à l'intérieur d'une certaine tolérance de variations au moyen de la mémoire tampon de données (1331).

8. Procédé pour noeuds IP mobiles (10) dans des réseaux hétérogènes (21-24) selon la revendication 3, **caractérisé en ce que** des paquets de données IP sortantes sont bufférisés dans une mémoire tampon de données (1331) du noeud mobile (10), si la connexion réseau du noeud mobile (10) est interrompue de sorte que le flux des données de sortie d'une ou de plusieurs applications IP (11) est conservé ou maintenu à l'intérieur d'une certaine tolérance de variations au moyen de la mémoire tampon de données (1331).

9. Système pour noeuds IP mobiles (10) dans des réseaux hétérogènes (21-24), système qui comprend un agent mère pour une attribution dynamique d'une adresse temporaire IP dite Care-of à une adresse mère statique IP quand le noeud mobile est déplacé dans les réseaux hétérogènes (21, 24), l'adresse dynamique dite Care-of indiquant l'emplacement de réseau actuel topologique du noeud mobile (10) et en vue de la dérivation des paquets de données IP avec l'adresse mère IP du noeud mobile en tant que adresse cible à l'adresse dite Care-of du noeud mobile (10), **caractérisé en ce que**
le noeud mobile (10) comprend un module de gestion d'interface (134), le module de gestion d'interface (134) comprenant des moyens pour examiner les interfaces de réseau physiques disponibles (14-17) du noeud mobile (10) et des moyens pour la liaison à l'une des interfaces de réseau physiques disponibles (14-17),
**en ce que** le module de gestion d'interface (134) comprend des moyens pour établir une table de conversion des interfaces de réseau physiques momentanément disponibles et configurables (14-17),
**en ce que** le noeud mobile (10) comprend une interface de réseau IP virtuelle, générée en permanence (133) qui est reliée par le module de gestion d'interface (134) au réseau actuel (21-24), en cas de changement d'interface de réseau physique (14-17) du noeud mobile (10), la liaison de l'interface de réseau IP virtuelle permanente (133) au réseau (21-24) est actualisée au moyen du module de gestion d'interface (134) en se basant sur la table de conversion.

10. Système pour noeuds IP mobiles (10) dans des réseaux hétérogènes (21-24) selon la revendication 9, **caractérisé en ce que** la vérification des interfaces de réseau physiques disponibles (14-17) du noeud mobile (10) par le module de gestion d'interface (134) est périodique.

11. Système pour noeuds IP mobiles (10) dans des réseaux hétérogènes (21-24) selon la revendication 9, **caractérisé en ce que** le noeud mobile (10) comprend des critères à l'aide desquels l'interface de réseau physique (14-17) est changée et actualisée automatiquement en se basant sur des informations de la table de conversion.

12. Système pour noeuds IP mobiles (10) dans des réseaux hétérogènes (21-24) selon la revendication 11, **caractérisé en ce que** les critères pour le changement automatique des interfaces physiques (14-17) sont déterminables par l'utilisateur.

13. Système pour noeuds IP mobiles (10) dans des réseaux hétérogènes (21-24) selon la revendication 9, **caractérisé en ce que** le noeud mobile (10) comprend des moyens pour la configuration dynamique d'interfaces de réseaux physiques disponibles (14-17).

14. Système pour noeuds IP mobiles (10) dans des réseaux hétérogènes (21-24) selon la revendication 9, **caractérisé en ce que** le noeud mobile (10) comprend des moyens pour la configuration statique d'interfaces de réseau physiques disponibles (14-17).

15. Système pour noeuds IP mobiles (10) dans des réseaux hétérogènes (21-24) selon la revendication 9, **caractérisé en ce que** le noeud mobile (10) comprend une mémoire tampon de données (1331) dans laquelle des paquets de données IP sortantes sont bufférisés, si la connexion réseau du noeud mobile (10) est interrompue de sorte que le flux des données de sortie d'une ou de plusieurs applications IP (11) est conservé ou maintenu à l'intérieur d'une certaine tolérance de variations au moyen de la mémoire tampon de données (1331).

16. Système pour noeuds IP mobiles (10) dans des réseaux hétérogènes (21-24) selon la revendication 11, **caractérisé en ce que** le noeud mobile (10) comprend une mémoire tampon de données (1331) dans laquelle des paquets de données IP sortantes sont bufférisés, si la connexion réseau du noeud mobile (10) est interrompue de sorte que le flux des données de sortie d'une ou de plusieurs applications IP (11) est conservé ou maintenu à l'intérieur d'une certaine tolérance de variations au moyen de la mémoire tampon de données (1331).
